# EUROPEAN PATENT APPLICATION

(11) **EP 1 221 661 A2**
(43) Date of publication of application: **10.07.2002**
(21) Application number: 02000007.1
(22) Date of filing: 02.01.2002
(51) Int. Cl.: G06F 17/30

(54) **Method and apparatus for dynamically updating a HTML based user interface**

(30) Priority: 05.01.2001 US 755482
(71) Applicant: Openwave Systems Inc., Redwood City, CA 94063 (US)
(72) Inventor: Yarvin, Curtis G., Redwood City, CA 94063 (US)
(74) Representative: Jehle, Volker Armin

(57) **Abstract**

A method and apparatus for dynamically updating a user interface are described. A data model is stored locally in a processing system. A presentation document is generated in the processing system based on the data model and a source document written in extensible markup language. The user interface is rendered in the processing system based on the presentation document. In response to an event, the processing system causes a corresponding change to the data model, and then automatically or semi-automatically determines a set of parts of the presentation document which are invalid as a result of the change and updates only those segments that are invalid. The user interface is then rendered based on the updated presentation document.

## Description

### FIELD OF THE INVENTION

The present invention pertains to user interfaces for computer systems and other processing devices. More particularly, the present invention relates to a method and apparatus for dynamically updating a markup language based user interface.

### BACKGROUND OF THE INVENTION

Browsers are software applications used to access hyperlinked content, typically over a network. Common uses of browsers include viewing World Wide Web pages and using hyperlink-based applications (e.g., applications for booking travel reservations, on-line banking, trading stock, etc.) over the Internet. Hyperlinked content generally is written in a markup language, such as HyperText Markup Language (HTML), eXtensible Markup Language (XML), Wireless Markup Language (WML) (for wireless devices), or variations of these languages. Browsers, therefore, are designed to interpret documents written in such markup languages and to display them to the user via a user interface (UI).

In a browser environment, a straightforward way to build an application UI is to define the UI in the browser's native markup language, such as eXtensible HTML (XHTML) or WML. However, when an application's state changes, the UI may need to change as well. Therefore, it is desirable to provide browsers with dynamic UIs for use with hyperlink based applications; that is, it is desirable to have UIs which change state in response to changes in state of the application. This problem has been solved, but not solved well.

Conventional mechanisms for authoring dynamic UIs in browsers are much more complex than writing static markup pages. In the standard Document Object Model (DOM) approach, content authors make their documents dynamic (using dynamic HTML, for example) by writing procedures which modify the documents in place, either as text or in an abstract structural representation. Besides making authoring difficult, the DOM approach undesirably breaks important abstraction boundaries in the browser. In particular, the DOM approach mixes the dynamic state of the application with its static definition, in a manner similar to self-modifying procedural code. DOM also makes no provision for automatic update of the presentation document (the document that is rendered and viewed by the user). That is, the presentation document can only be updated in response to a user-initiated request (e.g., an HTTP request).

Another standard that could be used to implement dynamic UI in browsers is eXtensible Stylesheet Language Transformation (XSLT). XSLT does cleanly separate the application data from the source document (which XSLT calls a "template" or "stylesheet") and the presentation document. However, XSLT requires the rendered application data to be in XML. This is problematic, because most applications store their dynamic data in the data structure primitives provided by the procedural language in which the application is written, allowing easy access to the data from the procedural code. Manipulating XML data is difficult, however. Furthermore, XSLT makes no provision for automatic or incremental update of the presentation document. That is, the presentation document can only be updated in response to a user-initiated request (e.g., an HTTP request), and it is not possible to update only the portions of the presentation document affected by a change in state.

There are many server-side dynamic document engines in use today, a popular example of which is the ColdFusion Web application server from Allaire Corporation of Newton, Massachusetts. By their nature, however, server-side engines also are not incremental or automatic. The granularity of network update is too coarse, and there is no way for the server to force a page to update.

### SUMMARY OF THE INVENTION

A method of dynamically updating a user interface in a processing system comprises generating a presentation document, and responding to an event. The presentation document is generated based on a source document and a stored data set. The data set may be stored locally in the processing system. Responding to the event includes modifying the data set, determining whether the modification to the data set should affect the presentation document, and if the modification to the data set should affect the presentation document, then updating only the parts of the presentation document that correspond to the modification to the data set. The update may be performed automatically.

Other features of the present invention will be apparent from the accompanying drawings and from the detailed description which follows.

### BRIEF DESCRIPTION OF THE DRAWINGS

The present invention is illustrated by way of example and not limitation in the figures of the accompanying drawings, in which like references indicate similar elements and in which:
Figure 1 illustrates a network environment in which the present invention may be used;
Figure 2 is a high-level block diagram of a processing system representing any of the processing systems shown in Figure 1;
Figure 3 illustrates a technique for dynamic update of a presentation document;
Figures 4A and 4B collectively form a flow diagram of the overall process of dynamically updating a user interface;
Figures 5 and 6 illustrate two variation of a technique for automatically updating a presentation document; and
Figure 7 illustrates a technique of semi-automatically updating a presentation document.

### DETAILED DESCRIPTION

A method and apparatus for dynamically updating a markup language based user interface are described. Note that in this description, references to "one embodiment" or "an embodiment" mean that the feature being referred to is included in at least one embodiment of the present invention. Further, separate references to "one embodiment" in this description do not necessarily refer to the same embodiment; however, neither are such embodiments mutually exclusive, unless so stated and except as will be readily apparent to those skilled in the art. Thus, the present invention can include any variety of combinations and/or integrations of the embodiments described herein.

As described in greater detail below, the method and apparatus may be briefly characterized as follows. A data model is stored locally in a processing system, such as a conventional computer system or a hand-held computing/communications device. A presentation document is generated in the processing system based on the data model and a source document written in extensible markup language (XML). The user interface is rendered in the processing system based on the presentation document. In response to an event, the processing system causes a corresponding change to the data model, and then automatically or semi-automatically determines the parts of the presentation document which are invalid as a result of the change. Such a part may be, for example, an individual XML tag, a consecutive sequence of tags, or essentially any other user interface feature. The processing system then updates only those parts of the presentation document that are invalid. The user interface is then rendered based on the updated presentation document. This process repeats each time an event is detected.

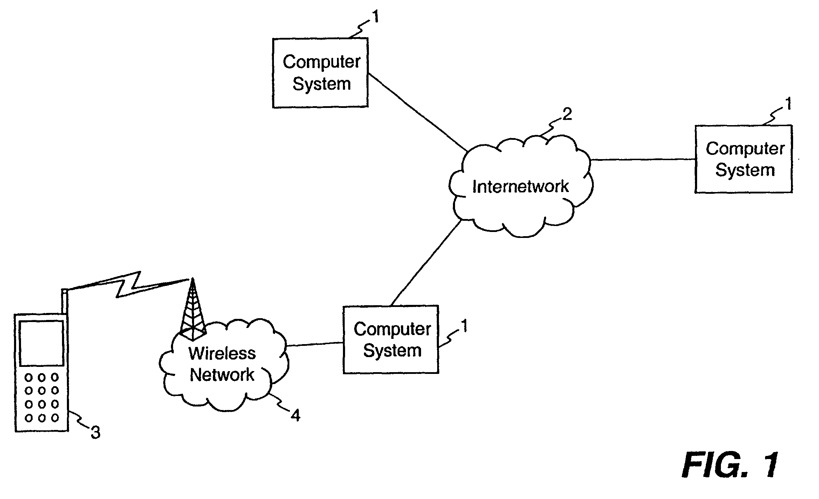

Figure 1 illustrates a network environment in which the present invention may be used. Note, however, that the present invention does not have to be implemented in a network environment. As shown, a number of computer systems 1 are coupled to each other on an internetwork 2, which may be, for example, the Internet. One or more of the computer systems 1 may operate as a server to provide content to other computer systems on the internetwork 2 (clients), such as Web pages and/or Web based applications. Hence one or more of the computer systems 1 may operate as clients of such servers. The clients may include one or more wireless devices 3, which are connected to the internetwork 2 through a wireless communications network 4 and one of the computer systems 1 that functions as a gateway server.

Each of the computer systems 1 may be any of a variety of types of conventional processing systems, such as a conventional personal computer (PC) or workstation. The wireless device 3 may be any of a variety of types of hand-held, wireless communications and/or computing devices, such as a personal digital assistant (PDA), cellular telephone, two-way pager, or a conventional laptop (notebook) computer with a wireless modem.

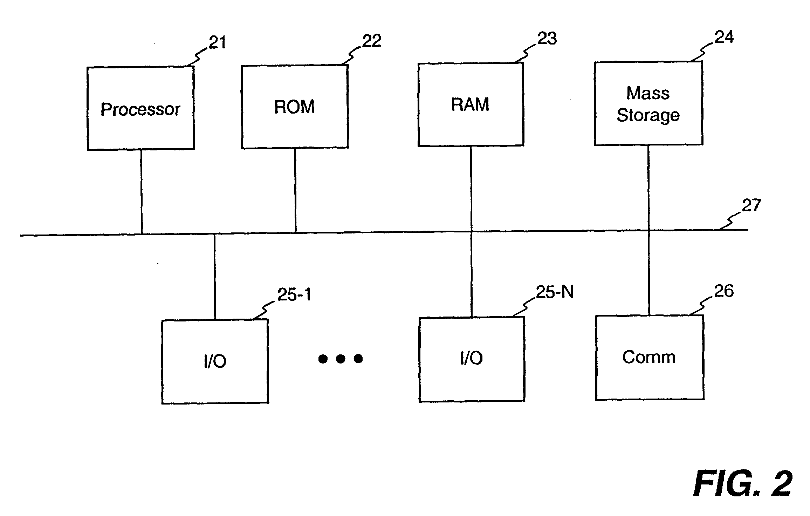

Figure 2 is a high-level block diagram of the hardware components of a processing system, which is representative of any of the processing systems shown in Figure 1. Note that Figure 2 is conceptual in nature and is, therefore, not intended to portray any one specific architecture. It will be recognized that the specific architecture and the complements included therein can vary according to a number of factors, such as the role of the processing system (e.g., client or server) and its specific intended functions. As shown, the processing system includes a processor 21, read-only memory (ROM) 22, random access memory (RAM) 23, a mass storage device 24, a number (N) of input/output (I/O) devices 21-1 through 21-N, and a communication device, all coupled to each other on a bus system 27.

The bus system 27 may include one or more buses connected to each other through various bridges, controllers and/or adapters, such as are well-known in the art. For example, the bus system may include a "system bus" that is connected through an adapter to one or more expansion buses, such as a Peripheral Component Interconnect (PCI) bus. The I/O devices 25 may include devices such as a keyboard, a pointing device (e.g., mouse, touchpad, trackball, etc.), display device (e.g., CRT or LCD), etc. Mass storage device 24 may include any suitable device for storing large volumes of data in a non-volatile manner, such as a magnetic disk or tape, magneto-optical (MO) storage device, or any of various types of Digital Versatile Disk (DVD) or Compact Disk (CD) based storage.

The communication device 26 may be any device suitable for or enabling the computer system 1 to communicate data with a remote processing system over a data communication link, such as a conventional telephone modem, a wireless modem, an Integrated Services Digital Network (ISDN) adapter, a Digital Subscriber Line (DSL) modem, a cable modem, a satellite transceiver, cellular telephone transceiver, or the like.

The dynamic document updating techniques described herein may be implemented in software. More specifically, the techniques may be implemented as part of a browser within a client processing system such as described above. Such an embodiment is henceforth assumed in this description, to facilitate explanation. The software embodying these techniques (e.g., the browser) may be contained within one or more storage devices within the processing system, such as RAM, ROM, a mass storage device, or combination thereof. Note, however, that in alternative embodiments, these techniques may be implemented at least partially in hardwired circuitry, or in a combination of hardwired circuitry and software.

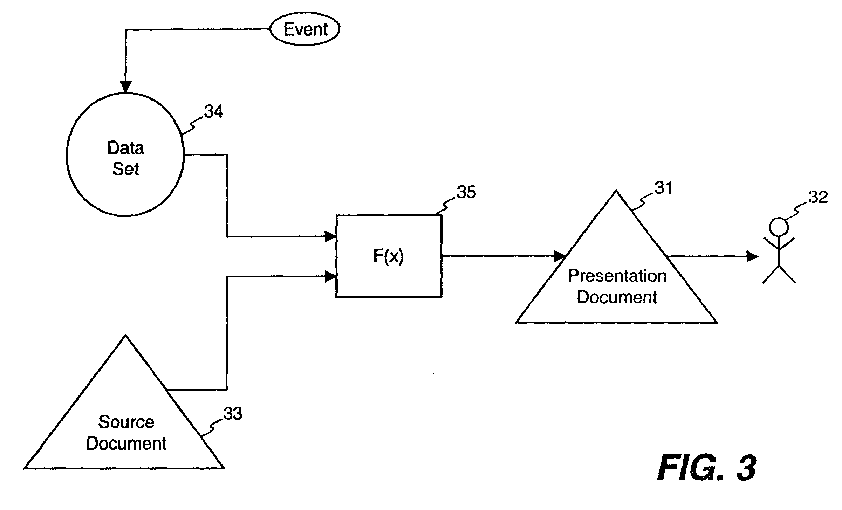

Figure 3 illustrates a technique for dynamic update of a presentation document. A presentation document 31 is generated and rendered so that it is viewable by user 32. The presentation document 31 is a function of a source document 33 and a data set 34. The data set 34 is stored in a dynamic memory element, such as a database or object system. The source document 33 is an XML document which is static and immutable, in the sense that it does not need to be modified dynamically to implement dynamic UI using the mechanism described herein. The presentation document 31 is an XML document which defines a UI (e.g., in XHTML). The function F(x) 35 is a reentrant, halting function. A simple example of the function F(x) is the expansion of "$" variable references to variable values in WML. More complex functions may, for example, conditionally include tags or generate iterated tags from array values in the data space. Other types of functions F(x) are also possible.

The data set 34 may be modified in response to an event, such as a user interaction (e.g., from a keyboard or mouse), a network interaction, or a timer expiration. In WML, XSLT, and other similar approaches, the path between the data set and the modifying function is passive; that is, updates of the presentation document are triggered by some external mechanism. For example, in ColdFusion and other server-side template models, update occurs in response to each HTTP request. Thus, updates are "manual", not automatic. XSLT specifies no update mechanism.

In accordance with the present invention, the path between the data set 34 and the function F(x) is active. That is, changes in the data set 34 automatically (or semi-automatically) trigger updates of the presentation document 31. Thus, the active update mechanism can operate in either of two ways: automatic or semi-automatic. In the case of automatic update, changes to the data set 34 trigger updates of the presentation document 31 automatically. The presentation update may have a coarser grain than the data space changes. For example, if in processing a single event, n changes to the data set are made, there might only be one presentation update, which occurs after event processing completes. Automatic update is ideal for the author of the content. However, it is relatively more complex and difficult to implement efficiently than the semi-automatic update, as it requires a dependency graph which traces back through every component of the presentation function.

In the case of semi-automatic update, the author defines dependency expressions which detect changes in the data set. In one embodiment, the dependency expression is associated with a tag in the source document. If the value of the dependency expression changes, the section of the presentation document generated by that tag is updated. To keep the presentation document up-to-date, all dependency expressions that affect the current UI are checked after every event. For example, a dependency expression may be a checksum of an index of some data structure or a version number. Ideally, such a dependency expressions is fast to compute, and much faster to compute than the presentation function. The author is responsible for the performance of the application.

Another aspect of the present invention is that the update can be incremental. That is, when the data set to changes, only the parts of the presentation document that depend on changed objects are updated. Incremental update is necessary for the semi-automatic case, and an optimization for the automatic case. Incremental update allows the dynamic document system to be used for fine-grained, low-latency operations, such as moving a scrollbar.

A primary goal of a dynamic presentation document architecture is to serve as a declarative application model. It is widely recognized that declarative languages, such as HTML, make it easier to build application user interfaces than procedural (more precisely, Turing-equivalent) languages, such as Java or C++. However, interfaces built using conventional declarative application environments (i.e., browsers) are much less powerful than procedural environments. Highly interactive applications with complex data models are difficult, impractical, or impossible to build. However, using the techniques described herein, it is possible to design a declarative application model in which most interactive user interfaces are easy to build.

The following elements are used to implement the automatic or semi-automatic, incremental dynamic update of a UI:
1) a presentation language, such as HTML, which can display all the textual and graphical primitives needed to render the application UI;
2) a simple, single-threaded event model, such as the DOM Level 2 event model for HTML (See Document Object Model (DOM) Level 2 Core Specification Version 1.0, W3C Recommendation November 13, 2000, World Wide Web Consortium), by which events can trigger side-effects;
3) a powerful functional expression language, such as ECMAScript restricted to functional primitives, or Lisp;
4) a local data storage mechanism, such as a store for ECMAScript objects; and
5) an extension to the presentation language to allow dynamic expressions to be embedded in and/or generate presentation markup. One such extension suitable for this purpose is described below. (Note that environments supporting style sheets must also support dynamic expressions in styles, which are not markup.)

Regarding element "2)" above, note that a mechanism is needed to modify the application data storage in response to events. This mechanism can be a an imperative, procedural language, such as WML Script or Javascript, or in general, any mechanism for expressing side effects.

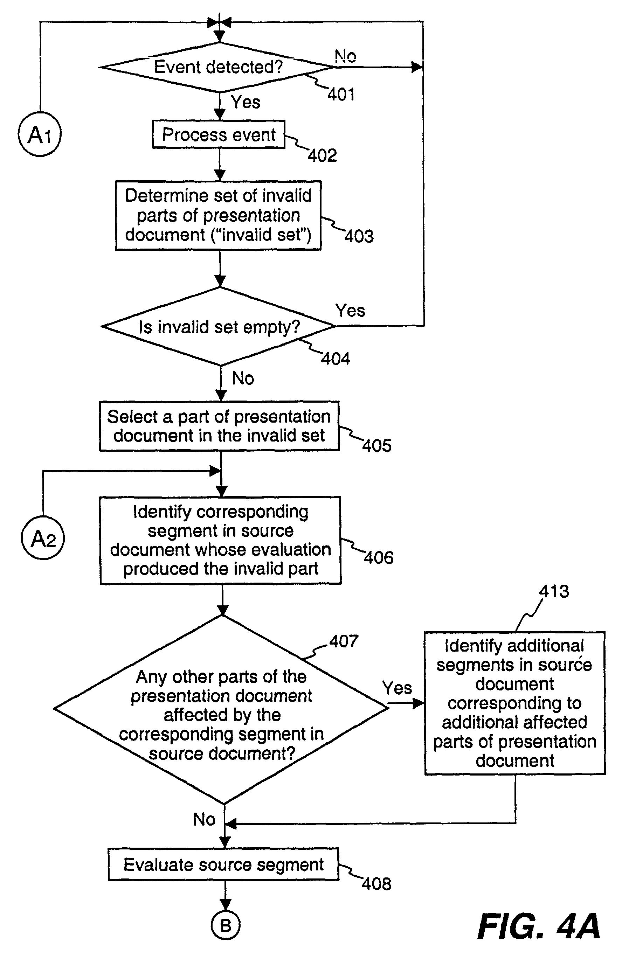

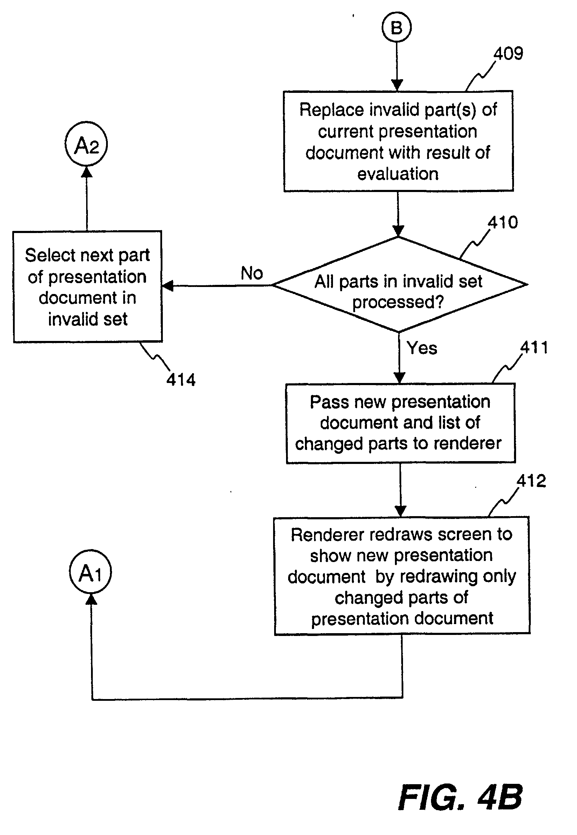

Figures 4A and 4B collectively show the overall process of dynamically updating a user interface, according to one embodiment of the present invention. This process is performed (at least in part) by the application environment (e.g., the browser, as is henceforth assumed) as its event loop. Initially, in processing block 401 the browser waits for an event to occur. An event may be, for example, a user interaction, such as keyboard or mouse, a network interaction, or a timer expiration. When an event is detected in block 401, then at block 402 the event is processed appropriately, depending on the type of event it is. An event binding is a procedural (Turing-equivalent) process that executes when the event occurs. It may modify transient storage (e.g., RAM) or persistent storage (e.g., hard disk or flash memory). Next, at block 403 the browser determines the set of parts of the presentation document that are invalid ("the invalid set") as a result of processing the event. The invalid set is initially empty. There are various ways of accomplishing this operation (block 403), which are described below, depending on whether the update mode is automatic or semi-automatic.

Next, at block 404 the browser determines whether the invalid set is empty. If the invalid set is empty, the process loops back to block 401. If the invalid set is not empty, then blocks 406 through 409 are performed for all elements contained in the invalid set. More specifically, at block 405 the browser initially selects one of the presentation document parts in the invalid set. At block 406, the browser identifies the corresponding segment in the source document, the evaluation of which caused the currently identified part of the presentation document to be invalid.

The browser then determines at block 407 whether any other parts of the presentation document (i.e., other than the currently identified part) are affected by the corresponding segment in the source document. For example, depending on the semantics of the presentation document, a single tag might affect the interpretation of other parts of the presentation document, which would usually (but not necessarily) adjoin the identified invalid part. As a more specific example, assuming the presentation language is HTML, then if the size of a table cell changes, the entire table may need to be laid out again. Another way to view this concept is that the presentation document has state that is functionally generated from it (e.g., the screen's frame buffer, and potentially other "intermediate" data structures, such as display lists). An important part of the presentation process is propagating the incremental update of the presentation document to these structures while minimizing the loss of incrementality.

Thus, if the result of the determination at block 407 is affirmative, then at block 413, the additional segments in the source document corresponding to these additional affected parts of the presentation document are identified. Following either block 407 or block 413, the browser 80 evaluates the source segment or segments identified in block 406 and (if applicable) block 413 and replaces the invalid part or parts of the current presentation document with the result of the evaluation at blocks 408 and 409, respectively. If, at block 410, all elements in the invalid set have not yet been processed according to blocks 406 through 409, then the next element (part)
in the invalid set is selected at block 414, and the process loops back to block 406. After all elements in the invalid set have been processed as described above, then at block 411 the browser passes the presentation document and a list of changed parts of the presentation document (resulting from processing the event) to the renderer. At block 412 the renderer redraws the screen to show the new presentation document, by redrawing only the changed parts of the presentation document.

As described above, at block 403 the browser determines the invalid parts of the presentation document resulting from processing of the event. This operation involves determining whether any side effects which have occurred as a result of the event have modified the result of any expressions upon which the current UI depends. Since this is an incremental update, the result of this phase is to construct the set of parts of the presentation document (e.g., individual XML tags or consecutive sequences of them) that executing the event binding has invalidated.

There are at least four algorithms which may be used to implement block 403, as will now be described . The choice of algorithms depends on whether the update model is to be automatic or semi-automatic and on tradeoffs between performance and complexity. The first three algorithms relate to the automatic update mode; the fourth relates to the semi-automatic update mode.

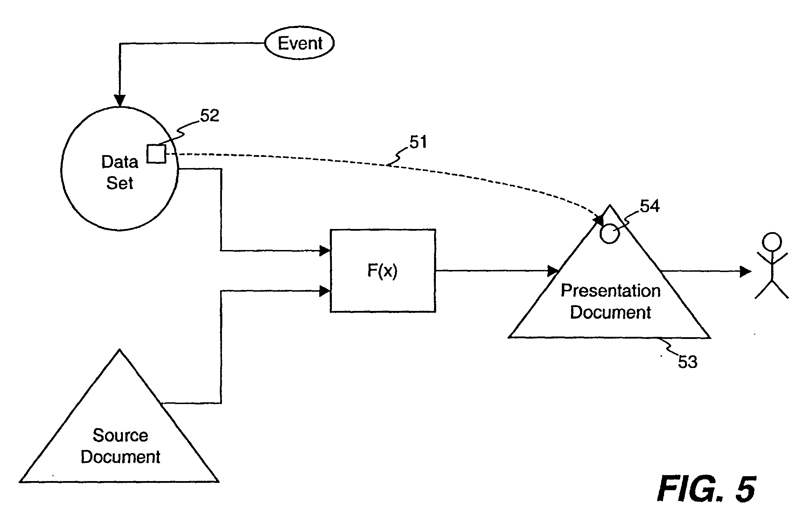

The first algorithm for automatic update is the simplest: the invalid set is always the whole presentation document. The second algorithm for automatic update is described now with reference to Figure 5. In this algorithm, the browser maintains a mark (pointer) 51 on every data object 52, referenced in expressions, which affects the current presentation document 53. The mark points to the set of parts 54 of the presentation document 53 which would be affected by modifying that object 52 (the "object invalid set"). During the processing of the event, every data object which the event procedure modifies is checked for this mark. If the mark is found, the invalid set is assigned the union of itself and the object invalid set. This algorithm is referred to as "backward search".

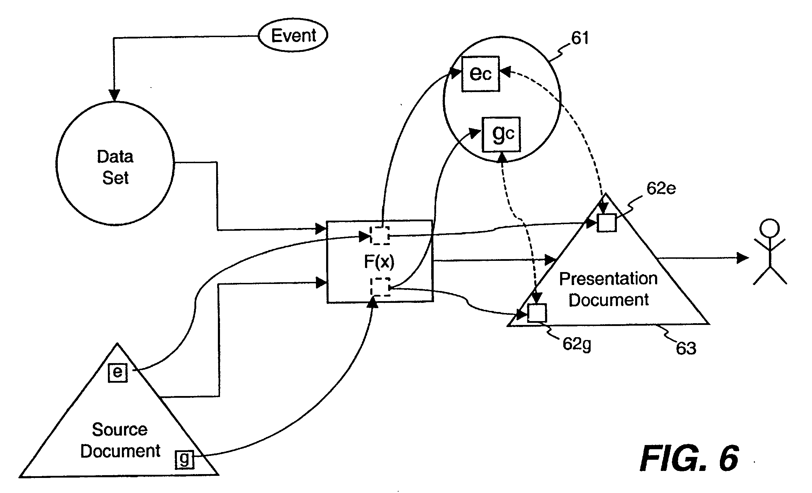

The third algorithm for automatic update is described now with reference to Figure 6. In this approach, the browser maintains, in a separate data structure 61, the result of evaluating every expression in the source document which affects the current rendered semantics of the presentation document, either verbatim or as a checksum. For example, in Figure 6 each of expressions e and g corresponds to a set of parts 62e and 62g, respectively, of the presentation document 63. Results e_{c} and g_{c} in data structure 61 represent the current results of evaluating expressions e and g, respectively. For each expression, the result is paired with the set of parts of the presentation document which would be affected by a change in the value of the expression (the "object invalid set"). After event processing, the browser reevaluates every dynamic expression in the source document and compares the result, verbatim or as a checksum, to its saved value. If the value sale to match, the invalid set is assigned the union of itself and the object invalid set. This algorithm is referred to as "forward search".

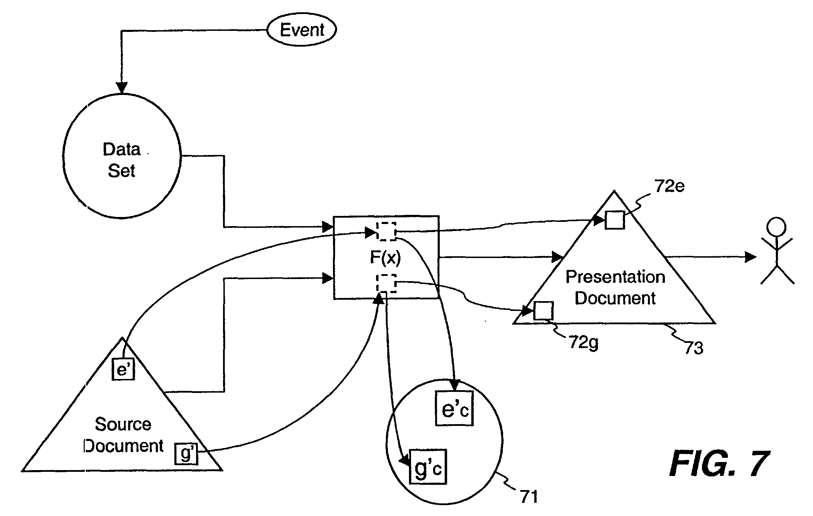

The fourth algorithm, which pertains to semiautomatic update, is described now with reference to Figure 7. In this approach, the browser maintains, in a separate data structure 71, the result of evaluating every explicitly declared dependency expression in the source document which affects the current rendered semantics of the presentation document, either verbatim or as a checksum. Such dependency expressions might be defined (by the author) for the purpose of, for example, providing faster update of the presentation document.

As an example of this approach, consider a database of records, each of which has a unique identity. Assume it is desirable to display the list of these records by title. It is very likely to be faster to checksum the identities than the titles, and this is something only the author can know. Alternatively, the author could further attach a number to the database, which is incremented on every change and, thus, serves as a version number. The dependency expression is then trivial.

In Figure 7 each of dependency expressions e' and g' corresponds to a set of parts 72e and 72g, respectively, of the presentation document 73. Results e'_{c} and g'_{c} in data structure 71 represent the current results of evaluating dependency expressions e' and g', respectively. The result of the evaluation is paired with the set of parts 72 of the presentation document 73 that would be affected by a change in the value of the expression (the "object invalid set"). After event processing, the browser reevaluates every explicitly declared dependency expression in the source document and compares the result, verbatim or as a checksum, to its saved value. If they fail to match, the invalid set is assigned the union of itself and the object invalid set.

As noted above, implementation of the dynamic update techniques described herein requires an extension to the presentation language to allow dynamic expressions to be embedded in and/or to generate presentation markup. An example of such an extension is now described, in the form of an XML transformation module referred to herein as "Wax".

The Wax transformation module allows arbitrary XML applications to extend themselves to support dynamic content driven by a "Wax dictionary" (the data model), by hybridizing their native document types with the tags and attributes in the Wax transformation module. A Wax-enhanced XML document defines itself as a pure function of "Wax dictionary" state. Evaluating this function produces a static XML document in the native document type. The transformation is purely functional (the original document is not modified) and stateless (declarative). Logically, a Wax-enhanced application which displays a dynamic document updates itself continuously to remain consistent with changes in the Wax dictionary. In practice this may not always be trivial, but Wax is designed to facilitate practical incremental update. Validation is also a key concern. A design goal is to minimize the impact of Wax integration on the native document and application model. Combining the Wax transformation module with an arbitrary native Document Type Definition (DTD) or schema (such as WML or XHTML) is straightforward. The result can be validated with ordinary XML version 1.0 tools.

The Wax transformation module is a set of XML tags and attributes. Hybridizing a DTD with the transformation module involves adding the Wax attributes to each tag in the native DTD that may be transformed, and the Wax tags as content where they are appropriate. (The transformation module may also be used without manual hybridization, via the XML namespace mechanism. However, the explicit integration model may be preferable, as XML namespaces at present have no validation support. To clarify its nature as a module, tag and attribute names have the prefix, "wax:" in this description.)

Attribute integration starts with the version attribute, "wax:version". The simplest way to integrate "wax:version" is to add it to the root tag of the document type, and no other. The version attribute has three uses. First and most important, it declares that the text of all CDATA attributes (see attribute definition below) which are not Wax transformation attributes, on all tags which are children of the tag which declares "wax:version" (i.e., not including the version tag itself) must be processed as expressions in the Wax expression language. By default, attribute expressions are evaluated in scalar context; if the expression evaluates to nil, the attribute is elided. Wax transformation attributes, and any other attributes defined by the Wax markup modules (transformation and effect), are handled differently. Wax specifies whether each attribute is evaluated in scalar or vector context, and it elides all hybridized attributes before passing them to the native application. Second, the version attribute declares that all Wax transformation attributes on tags which are children of the version tag, must be applied as specified by the document type. (Transformation attributes outside a version tag are errors and must be ignored.) Third, the version attribute declares the version of Wax for which the document is intended. If the major version number of the Wax processor differs from the major version number of the version attribute, the Wax processor must reject the document.

The wax version attribute may be defined as follows (using XML document type definition syntax):

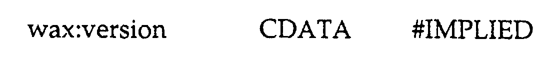

The following is an example of the use of the version attribute in a source document:

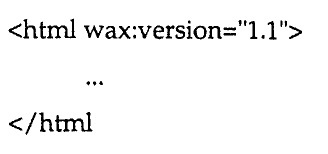

The Wax transformation module also provides a set of transformation attributes. Transformation attributes dynamically elide or repeat tags. In general, transformation attributes can be integrated into the attribute set of any tag. All transformations may be legal for all tags, barring specific reasons to the contrary (for example, if it makes no sense to repeat a tag, it is reasonable to disallow "wax:foreach" on that tag)

In one embodiment, Wax supports four simple transformation attributes: "wax:if", "wax:unless", "wax:foreach," and "wax:in". The wax:if and wax:unless attributes both evaluate their values as expressions in scalar context. If the expression evaluates to the string "false", wax:if elides its tag; if its value is "true", the tag is left intact. The wax:unless attribute has the opposite effect. If their values are anything other than "true" or "false", wax:if and wax:false leave their tags unchanged; however, in a development environment this should generate a warning or error.

The attributes waxif and wax:unless may be defined as follows:

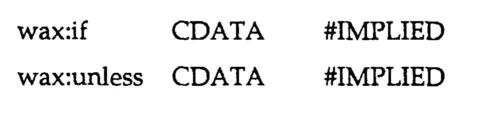

The following is an example of the use of these attributes in a source document:

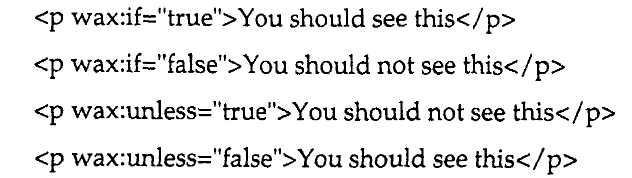

The wax:foreach and wax:in attributes implement tag repetition. The wax:foreach attribute, which evaluates as a scalar, is an iteration variable name to apply to each list entry in wax:in, which evaluates as a vector. One copy of the tag is created for each entry in the list. References to the alias whose name is the iteration variable name are replaced with the corresponding iteration value for that entry. If either wax:foreach or wax:in is missing or nil, the tag is elided.

The wax:foreach and wax:in attributes may be defined as follows:

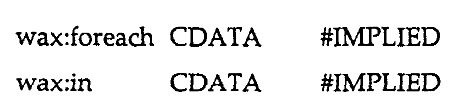

The following is an example of the use of the wax:foreach and wax:in attributes in a source document:

The expression 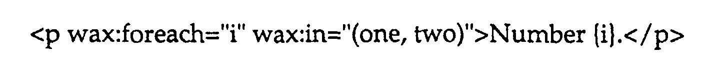 evaluates to

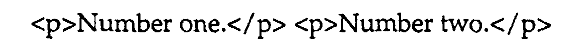

Although Wax does not define the processing model for the native application, it can use the author's knowledge of the document to help enable applications to implement more fine-grained update models. This is done via the "wax:depends" attribute, which lets the author specify a list of definitions on which a tag's dynamic content depends. (The same list might be extractable by some intelligent analysis of the tag and its contents, but this would both increase the burden on the Wax implementation, and define an environment in which the behavior of the system was dependent on a set of semantics which it would be difficult to define precisely, which is not what the author wants.) The value of wax:depends is a pattern: an expression which (unlike other attribute expressions) is not logically evaluated as the document is parsed, and must therefore be quoted as a literal. The pattern should evaluate to a list of names on which the tag may depend. Should the values of these names (or the contents of the list itself) change, the application will be notified, if it supports incremental update.

The wax:depends attribute may be defined as follows:

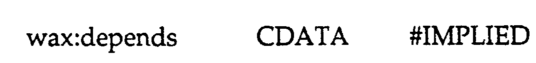

The following is an example of the use of the wax:depends attribute in a source document:

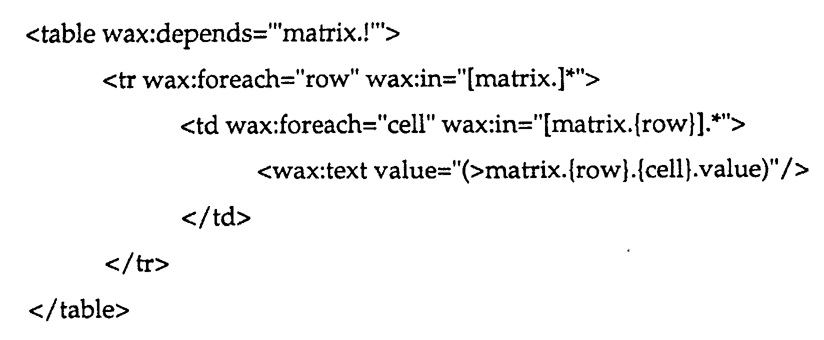

The Wax transformation module contains two tags: <wax:text> and <wax:alias>. The <wax:text> tag substitutes a scalar Wax expression value directly into XML #PCDATA (see definition below) It should be supported as content by any tag which already supports #PCDATA.

The <wax:text> tag may be defined as follows:

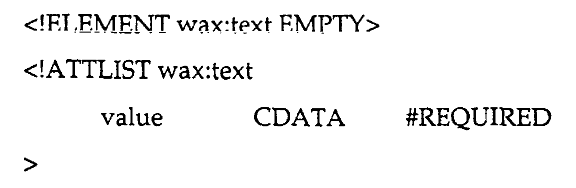

The following is an example of the use of the <wax:text> tag in a source document:

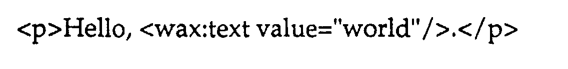

The <wax:alias> tag defines a Wax expression alias. The suggested integration model is for a document type to support <wax:alias> only as a direct child of the root tag. Done this way, aliases should apply to all expressions in the document.

The <wax:alias> tag may be defined as follows:

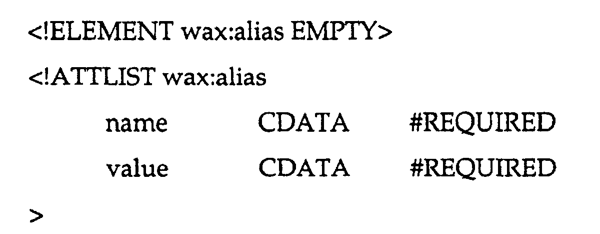

The following is an example of the use of the <wax:alias> tag in a source document:

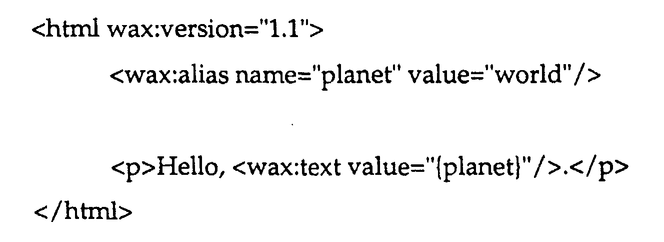

The following is an example of a simple application that can be constructed in accordance with the above teachings, to provide incremental, automatic and semi-automatic update of an application UI. (The semi-automatic aspect is implemented using the wax:depends attribute.) The example is a working email application of the type which may be implemented in a wireless device, such as a cellular telephone. This example is constructed using WML version 1.3 and the WAX transformation module. This example implements the simplest case of automatic update, i.e., invalidation of the entire presentation document in response to a change in the data set. The application presents a list of the user's email messages, with actions such as reading and deleting available for each message. When the email store changes (for example, mail arrives in the background), the list will automatically update on the screen.

The expression language and data store are a simple name-value pair model with queries based on lexical wildcards, such as the '*' commonly used in command-line shells. Note, however, that other languages, such as ECMAScripts or Lisp, may be used as the expression language instead.

The example below is annotated with explanatory remarks, which are indicated by the character "#" preceding the remark. Each remark precedes the code to which the remark refers.

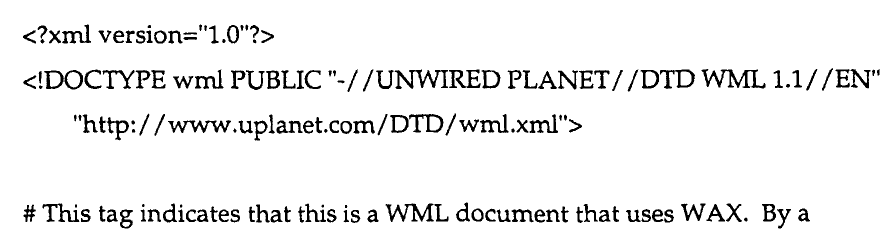

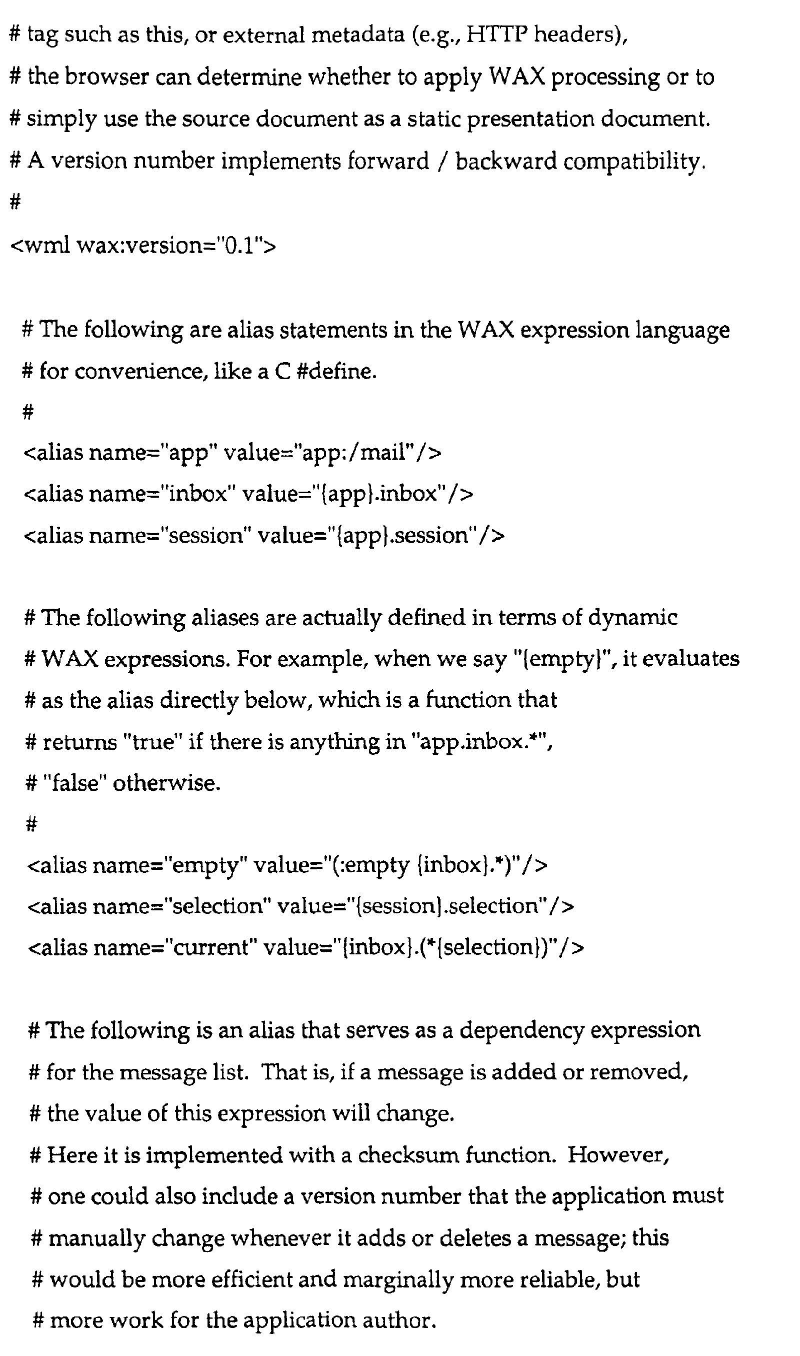

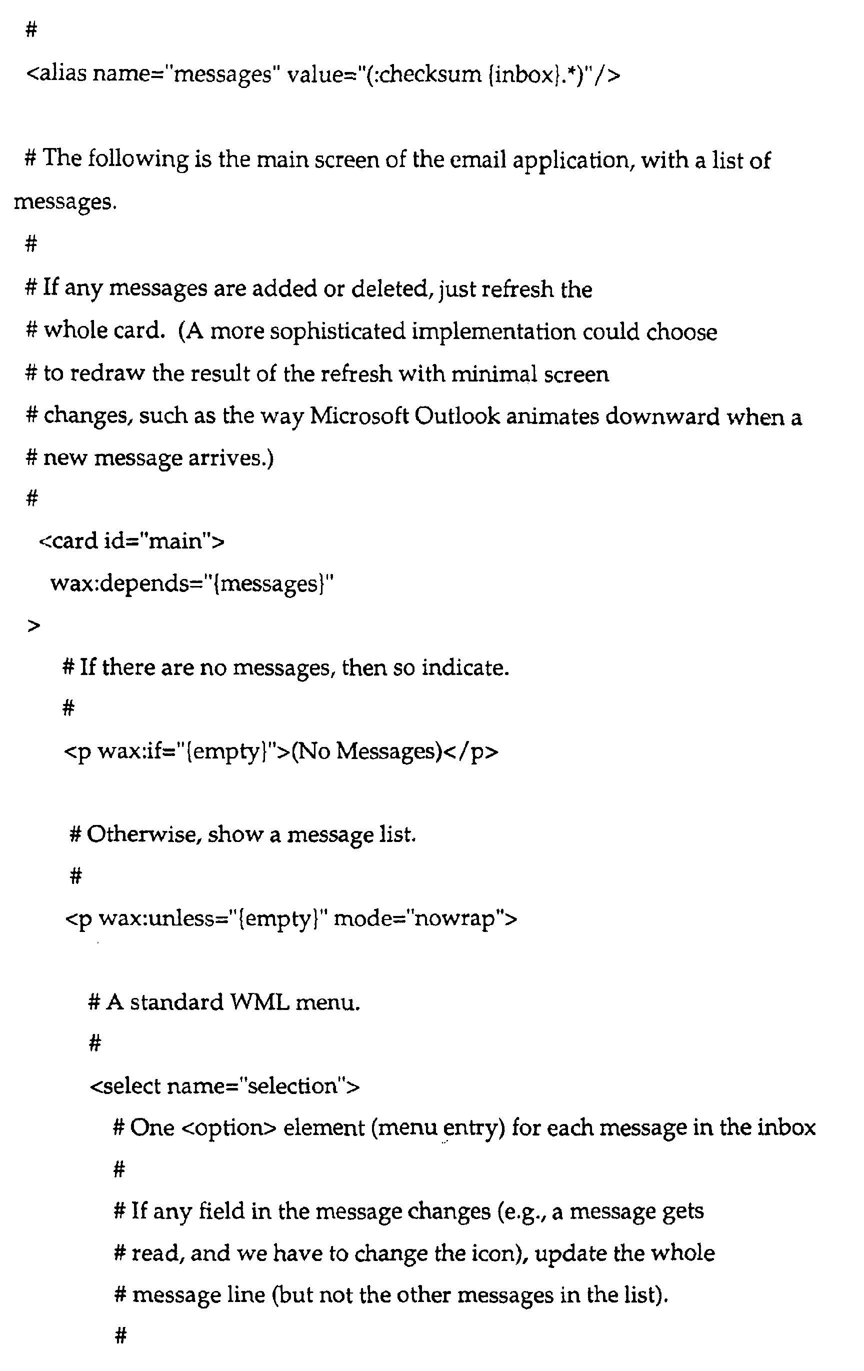

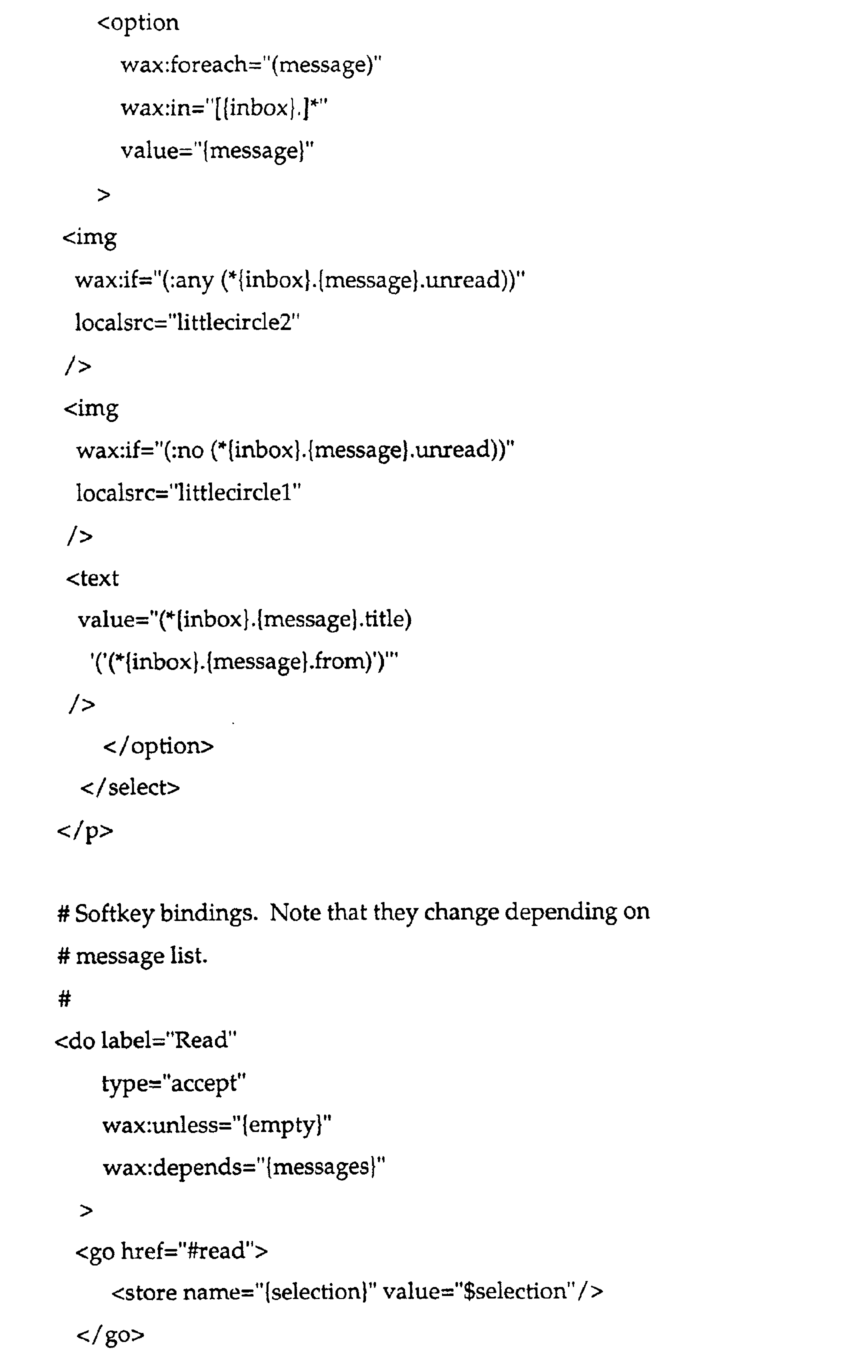

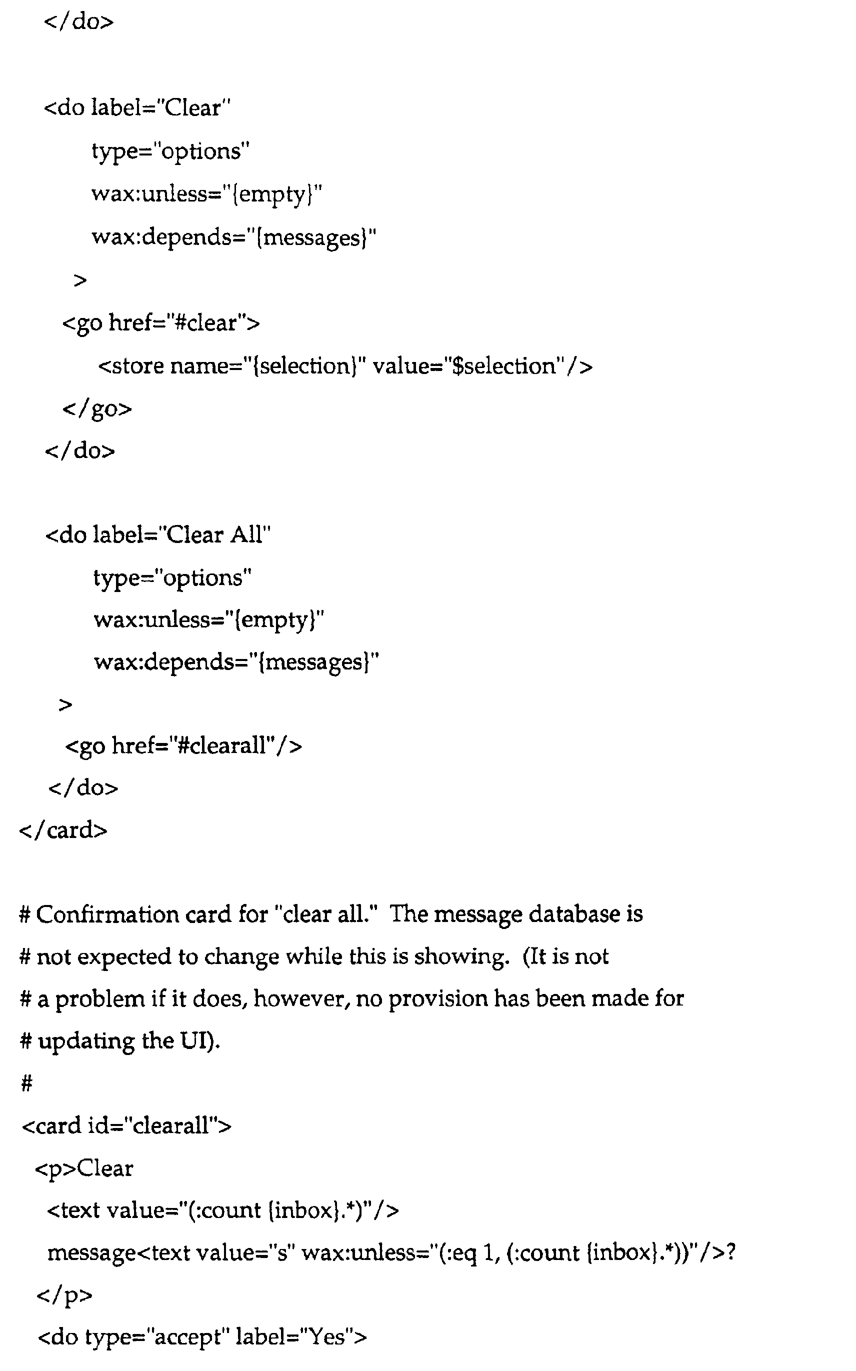

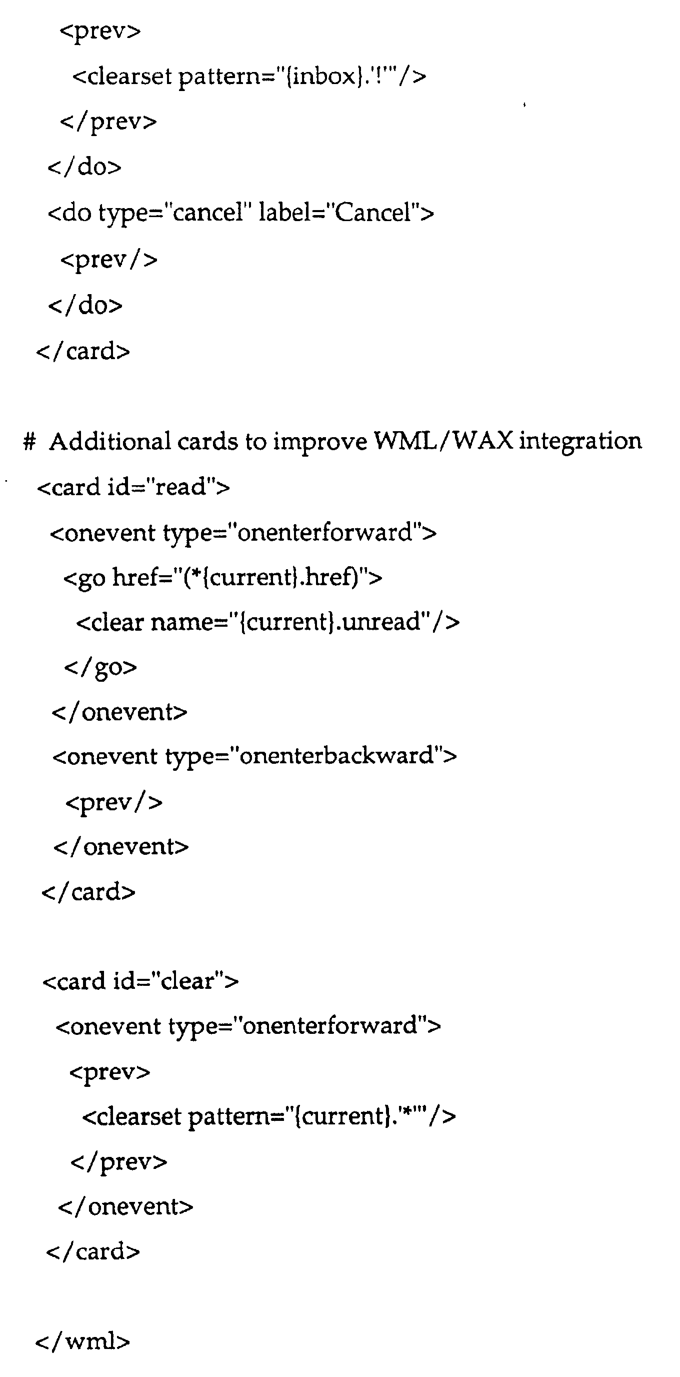

Thus, a method and apparatus for dynamically updating a markup language based user interface have been described. Although the present invention has been described with reference to specific exemplary embodiments, it will be evident that various modifications and changes may be made to these embodiments without departing from the broader spirit and scope of the invention as set forth in the claims. Accordingly, the specification and drawings are to be regarded in an illustrative sense rather than a restrictive sense.

## Claims

1. A method of dynamically updating a user interface in a processing system, the method comprising:
storing a data set locally in the processing system;
generating a presentation document based on a source document and the data set; and
responding to an event by
modifying the data set in the processing system,
determining whether the modification to the data set should affect the presentation document, and
if the modification to the data set should affect the presentation document, then automatically updating only parts of the presentation document that correspond to the modification to the data set.

2. A method as recited in claim 1, wherein the processing system generates a user interface, and wherein the method further comprises using the updated presentation document to update the user interface dynamically.

3. A method as recited in claim 1, wherein the source document is written in an extensible markup language.

4. A method as recited in claim 1, wherein:
the source document comprises a tag having a dependency expression as an attribute;
said determining whether the modification to the data set should affect the presentation document comprises evaluating the dependency expression; and
the method further comprises updating the presentation document, if appropriate, based on a result of the dependency expression.

5. A method of dynamically updating a user interface on a local processing system, the method comprising:
storing data in the local processing system;
providing a presentation document in the local processing system based on the data and a source document written in an extensible markup language, wherein the presentation document is dependent upon one or more expressions that operate on the data;
rendering the user interface in the local processing system based on the presentation document;
detecting an event in the local processing system;
responding to the event in the local processing system by
causing a change to the data in the local processing system,
determining whether the presentation document is dependent upon at least one expression, the result of which is affected by the change to the data, and
if the presentation document is dependent upon at least one expression, the result of which is affected by the change to the data, then automatically updating only one or more parts of the presentation document that depend on said at least one expression, without updating the entire presentation document; and
rendering the user interface in the local processing system based on the updated presentation document.

6. A method as recited in claim 5, wherein:
the source document comprises a tag having a dependency expression as an attribute;
said determining comprises evaluating the dependency expression; and
the method further comprises updating the presentation document, if appropriate, based on the dependency expression.

7. A method and apparatus for dynamically updating a user interface in a processing system, the method comprising:
generating a presentation document in the processing system based on a stored data model and a source document written in extensible markup language;
rendering the user interface in the processing system based on the presentation document;
responding to an event in the local processing system by
causing a change to the data set,
determining a set of parts of the presentation document which are invalid as a result of the change, and
automatically updating only those parts of the presentation document that are invalid, without updating the entire presentation document; and
rendering the user interface based on the updated presentation document.

8. A method as recited in claim 7, wherein the data set is stored locally in the processing system.

9. A method as recited in claim 7, wherein:
the source document comprises a tag having a dependency expression as an attribute;
said determining a set of segments comprises evaluating the dependency expression; and
the method further comprises updating the presentation document, if appropriate, based on a result of the dependency expression.

10. A method of dynamically updating a user interface on a local processing system, the method comprising:
generating a presentation document based on a source document and a stored data set; and
responding to an event by
modifying the data set,
determining whether the modification to the data set should affect the presentation document, and
if the modification to the data set should affect the presentation document, then automatically updating the presentation document based on the modification to the data set.

11. A method as recited in claim 10, further comprising storing the data set locally within the local processing system.

12. A method as recited in claim 10, wherein:
the source document comprises a tag having a dependency expression as an attribute;
said determining whether the modification to the data set should affect the presentation document comprises evaluating the dependency expression; and
the method further comprises updating the presentation document, if appropriate, based on the dependency expression.

13. A method as recited in claim 10, wherein said automatically updating the presentation document comprises automatically updating only segments of the presentation document that correspond to the changed data, without updating the entire presentation document.

14. A method as recited in claim 10, further comprising storing the data set locally within the local processing system, wherein said automatically updating the presentation document comprises automatically updating only segments of the presentation document that depend on the changed data, without updating the entire presentation document.

15. A method as recited in claim 10, wherein the source document is an extensible markup language document.

16. A method of dynamically updating a user interface on a local processing system, the method comprising:
providing a presentation document in the local processing system based on a source document written in an extensible markup language and a data set;
rendering the user interface in the local processing system based on the presentation document;
detecting an event in the local processing system;
responding to the event in the local processing system by
causing a change to the data in the local processing system,
determining whether the presentation document is dependent upon the changed data, and
if the presentation document is dependent upon the changed data, then automatically updating the presentation document based on the change to the data; and
rendering the user interface in the local processing system based on the updated presentation document.

17. A method as recited in claim 16, further comprising storing the data set locally within the local processing system.

18. A method as recited in claim 16, further comprising storing the data set locally within the local processing system, wherein said automatically updating the presentation document comprises automatically updating only one or more segments of the presentation document that depend on the changed data, without updating the entire presentation document.

19. A method as recited ind claim 16, wherein:
the source document comprises a tag having a dependency expression as an attribute;
said determining whether the presentation document is dependent upon the changed data comprises evaluating the dependency expression; and
the method further comprises updating the presentation document, if appropriate, based on a result of the dependency expression.

20. A method of dynamically updating a user interface on a local processing system, the method comprising:
generating a presentation document based on a source document and a stored data set; and
responding to an event by
modifying the data set,
determining whether the modification to the data set should affect the presentation document, and
if the modification to the data set should affect the presentation document, then updating only segments of the presentation document that correspond to the changed data, without updating the entire presentation document.

21. A method as recited in claim 20, further comprising storing the data set locally within the local processing system.

22. A method as recited in claim 20, wherein said updating comprises automatically updating only segments of the presentation document that depend on the changed data.

23. A method as recited in claim 20, further comprising storing the data set locally within the local processing system, wherein said updating the presentation document comprises automatically updating only segments of the presentation document that depend on the changed data.

24. A method as recited in claim 20, wherein the source document comprises a tag having a dependency expression as an attribute, and wherein said determining whether the modification to the data set should affect the presentation document comprises evaluating the dependency expression.

25. A method as recited in claim 20, wherein the source document is an extensible markup language document.

26. A method of dynamically updating a user interface on a local processing system, the method comprising:
providing a presentation document in the local processing system based on a source document written in an extensible markup language and a data set;
rendering the user interface in the local processing system based on the presentation document;
detecting an event in the local processing system;
responding to the event in the local processing system by
causing a change to the data set in the local processing system,
determining whether the presentation document is dependent upon the data changed by the change to the data set, and
if the presentation document is dependent upon the changed data, then updating only one or more segments of the presentation document that depend on said changed data, without updating the entire presentation document; and
rendering the user interface in the local processing system based on the updated presentation document.

27. A method as recited in claim 26, wherein said updating comprises automatically updating said one or more segments of the presentation document that depend on said changed data.

28. A method as recited in claim 26, wherein the source document comprises a tag having a dependency expression as an attribute, and wherein said determining whether the presentation document is dependent upon the data changed by the change to the data set comprises evaluating the dependency expression.

29. A method as recited in claim 26, further comprising storing the data set within the local processing system.

30. A method as recited in claim 26, wherein said updating comprises automatically updating said one or more segments of the presentation document that depend on said changed data;
the method further comprising storing the data set within the local processing system.

31. A method of dynamically updating a user interface on a local processing system, the method comprising:
storing, in the local processing system, a data set for use in generating a presentation document;
generating a presentation document based on a source document and the stored data set; and
responding to an event by
modifying the data set in the local processing system,
determining whether the modification to the data set should affect the presentation document, and
if the modification to the data set should affect the presentation document, then updating the presentation document based on the modification to the data set.

32. A method as recited in claim 31, wherein said updating comprises automatically updating the presentation document.

33. A method as recited in claim 31, wherein the source document comprises a tag having a dependency expression as an attribute, and wherein said determining whether the modification to the data set should affect the presentation document comprises evaluating the dependency expression.

34. A method as recited in claim 31, wherein said updating comprises updating only segments of the presentation document that correspond to the changed data.

35. A method as recited in claim 31, wherein said updating comprises automatically updating only segments of the presentation document that depend on the changed data.

36. A method as recited in claim 31, wherein the source document is written in an extensible markup language.

37. A method of dynamically updating a user interface on a local processing system, the method comprising:
storing data in the local processing system;
providing a presentation document in the local processing system based on a source document written in an extensible markup language and the data;
rendering the user interface in the local processing system based on the presentation document;
detecting an event in the local processing system;
responding to the event in the local processing system by
causing a change to the data in the local processing system,
determining whether the presentation document is dependent upon the changed data, and
if the presentation document is dependent upon the changed data, then updating the presentation document based on the change to the data; and
rendering the user interface in the local processing system based on the updated presentation document.

38. A method as recited in claim 37, wherein said updating the presentation document comprises automatically updating the presentation document in response to the event.

39. A method as recited in claim 37, wherein the source document comprises a tag having a dependency expression as an attribute, and wherein said determining whether the presentation document is dependent upon the changed data comprises evaluating the dependency expression.

40. A method as recited in claim 37, wherein said updating comprises updating only one or more segments of the presentation document that depend on the changed data, without updating the entire presentation document.

41. A method as recited in claim 37, wherein said updating the presentation document comprises automatically updating only one or more segments of the presentation document that depend on the changed data, without updating the entire presentation document.

42. A machine-readable storage medium containing instructions which, when executed by a machine, configure the machine to perform a method and apparatus for dynamically updating a user interface in a processing system, the method comprising:
storing a data set locally in the processing system;
generating a presentation document in the processing system based on the data model and a source document written in extensible markup language;
rendering the user interface in the processing system based on the presentation document;
responding to an event in the local processing system by
causing a change to the data set,
determining a set of parts of the presentation document which are invalid as a result of the change, and
automatically updating only those parts of the presentation document that are invalid, without updating the entire presentation document; and
rendering the user interface based on the updated presentation document.

43. A machine-readable storage medium as recited in claim 42, wherein:
the source document comprises a tag having a dependency expression as an attribute;
said determining a set of segments comprises evaluating the dependency expression; and
the method further comprises updating the presentation document, if appropriate, based on a result of the dependency expression.

44. A computing device comprising:
a processor;
an output device;
a first storage unit containing a data set for use in generating an extensible markup language based presentation document; and
a second storage unit containing instructions which configure the processor to
generate the presentation document based on a source document written in an extensible markup language and the data set, wherein the presentation document is dependent upon one or more expressions that operate on the data;
present a user interface at the output device based on the presentation document;
detect an event; and
respond to the event by
causing a change to the data set,
determine whether the presentation document is dependent upon at least one expression, the result of which is affected by the change to the data, and
if the presentation document is dependent upon at least one expression, the result of which is affected by the change to the data, then automatically updating only one or more segments of the presentation document that depend on said at least one expression, without updating the entire presentation document, and
present the user interface at the output device based on the updated presentation document.

45. A computing device as recited in claim 44, wherein the computing device is a wireless, hand-held computing device.

46. A computing device as recited in claim 45, wherein the computing device is configured to receive the source document from a remote server over a network.

47. A computing device as recited in claim 44, wherein:
the source document comprises a tag having a dependency expression as an attribute; and
the method further comprises updating the presentation document, if appropriate, based on the dependency expression.
